(19) Europäisches Patentamt
European Patent Office
Office européen des brevets

(11) Veröffentlichungsnummer: **0 474 599 B1**

(12) **EUROPÄISCHE PATENTSCHRIFT**

(45) Veröffentlichungstag der Patentschrift: **05.04.95**

(51) Int. Cl.[6]: **D06P 3/54**, D06P 1/00, D06P 5/20, C09B 1/28

(21) Anmeldenummer: **91810687.3**

(22) Anmeldetag: **27.08.91**

(54) **Verfahren zum Färben von hydrophobem Textilmaterial mit Dispersionsfarbstoffen in überkritischem CO2.**

(30) Priorität: **03.09.90 CH 2837/90**

(43) Veröffentlichungstag der Anmeldung: **11.03.92 Patentblatt 92/11**

(45) Bekanntmachung des Hinweises auf die Patenterteilung: **05.04.95 Patentblatt 95/14**

(84) Benannte Vertragsstaaten: **AT BE CH DE ES FR GB IT LI NL SE**

(56) Entgegenhaltungen:
**DE-A- 3 906 724**
**FR-A- 806 597**
**FR-A- 2 357 531**

**JOURNAL OF ORGANIC CHEMISTRY, Bd. 49, Nr. 26, 1984, EASTON/US, Seiten 5097-5101; JOHN A. HYATT: "Liquid and supercritical carbon dioxide as organic solvents"**

(73) Patentinhaber: **CIBA-GEIGY AG**
**Klybeckstrasse 141**
**CH-4002 Basel (CH)**

(72) Erfinder: **Schlenker, Wolfgang, Dr.**
**Rixheimerstrasse 17**
**CH-4055 Basel (CH)**
Erfinder: **Werthemann, Dieter, Dr.**
**Scherkesselweg 15**
**CH-4052 Basel (CH)**
Erfinder: **Liechti, Peter, Dr.**
**Alte Olsbergerstrasse 17**
**CH-4422 Arisdorf (CH)**
Erfinder: **Della Casa, Angelo**
**Gerstenweg 66**
**CH-4125 Riehen (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft ein Verfahren zum Färben von hydrophobem Textilmaterial mit Dispersionsfarbstoffen.

Hydrophobe Textilmaterialien werden üblicherweise aus wässrigen Färbeflotten gefärbt. Dabei tritt niemals eine vollständige Baderschöpfung auf, d.h. die Farbstoffe ziehen nicht quantitativ auf das jeweils zu färbende Substrat. Dies wiederum führt dazu, dass die nach dem Färbevorgang verbleibende Farbstoffflotte noch, abhängig von den jeweiligen Farbstoffen und Substraten, mehr oder weniger grosse Mengen Farbstoff enthält. Daher fallen beim Färben relativ grosse Mengen an farbigen Abwässern an, die aufwendig gereinigt werden müssen.

Der vorliegenden Erfindung liegt die Aufgabe zugrunde, ein Verfahren zum Färben von Textilmaterial zur Verfügung zu stellen, bei dem keine oder keine nenneswerten Mengen an farbigen Abwässern anfallen.

Diese Aufgabe wird durch das erfindungsgemässe Verfahren gelöst.

Die vorliegende Erfindung betrifft somit ein Verfahren zum Färben von hydrophobem Textilmaterial mit Dispersionsfarbstoffen, das dadurch gekennzeichnet ist, dass man das Textilmaterial in überkritischem Kohlendioxid mit einem Anthrachinonfarbstoff der Formel

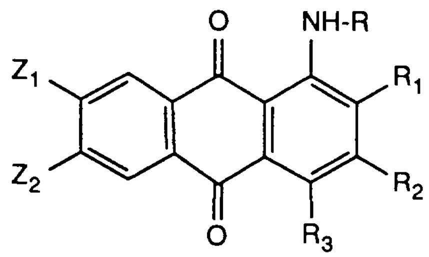

(1),

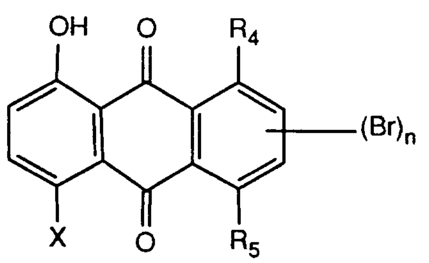

(2) oder

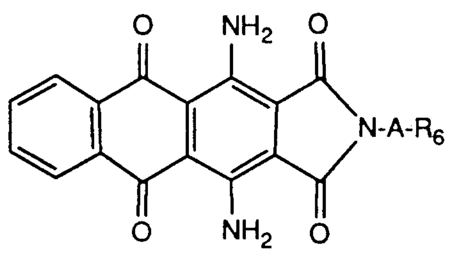

(3)

behandelt, worin

$Z_1$ und $Z_2$ unabhängig voneinander je Wasserstoff oder Halogen,

R Wasserstoff oder gegebenenfalls substituiertes Alkyl oder Phenyl,

$R_1$ Wasserstoff, Chlor, $C_1$-$C_4$-Alkoxy, gegebenenfalls substituiertes Phenoxy, $C_1$-$C_4$-Alkoxycarbonyl, $C_1$-$C_8$-Alkyltetrazolyl, Phenoxysulfonyl oder einen Rest der Formel

- O - A- O - Y

worin A einen Alkylenrest mit 2 bis 6 C-Atomen und Y gegebenenfalls substituiertes Phenyl, Phenoxycarbo-

nyl, Phenylcarbonyl, $C_1$-$C_4$-Alkylcarbonyl oder $C_1$-$C_4$-Alkoxycarbonyl bedeutet,
$R_2$ Wasserstoff, Chlor, gegebenenfalls substituiertes Phenoxy oder Cyan,
$R_3$ Hydroxy, Amino oder einen Rest -$NHR_7$, worin $R_7$ gegebenenfalls substituiertes Alkyl oder Phenylsulfonyl bedeutet,
X Amino oder Nitro,
$R_4$ Hydroxy, Amino oder gegebenenfalls substituiertes Alkylamino,
n 0, 1 oder 2,
$R_5$ Hydroxy, Amino oder gegebenenfalls substituiertes Alkylamino oder Phenylamino,
A einen Alkylenrest mit 2 bis 6 C-Atomen und
$R_6$ $C_1$-$C_6$-Alkyl, $C_1$-$C_6$-Alkoxy, $C_1$-$C_6$-Alkoxy-$C_2$-$C_4$-alkoxy, Phenoxy, Phenoxy-$C_2$-$C_4$-alkoxy oder $C_1$-$C_6$-Alkoxycarbonyl-$C_2$-$C_4$-alkoxy bedeuten.

Das erfindungsgemässe Verfahren sieht vor, anstelle der vorstehend beschriebenen wässrigen Flotten solche Farbflotten zu verwenden, bei denen das Wasser durch überkritisches Kohendioxid ersetzt ist. Unter dem Begriff überkritisches $CO_2$ versteht man $CO_2$, bei dem der Druck und die Temperatur des $CO_2$ oberhalb des kritischen Druckes und der kritischen Temperatur liegen. Hierbei weist das überkritische $CO_2$ annähernd die Viskosität des entsprechenden Gases und eine Dichte auf, die näherungsweise mit der Dichte des entsprechend verflüssigten Gases vergleichbar ist.

Das erfindungsgemässe Verfähren weist eine Reihe von Vorteilen auf. Bedingt dadurch, dass das hierbei eingesetzte überkritische $CO_2$ nicht ins Abwasser gelangt, sondern nach der Färbung erneut eingesetzt wird, treten bei dem erfindungsgemässen Verfahren keine Abwasserbelastungen auf. Ferner laufen bei dem erfindungsgemässen Verfahren, die für die Färbung des textilen Substrates erforderlichen Stoffaustauschvorgänge im Vergleich zu wässrigen Systemen wesentlich schneller ab. Dies wiederum führt dazu, dass das zu färbende textile Substrat besonders gut und schnell durchströmt werden kann. Bei Anwendung des erfindungsgemässen Verfahrens treten bei der Färbung von Wickelkörpern keine Ungleichmässigkeiten bezüglich der Durchströmung des Wickelkörpers auf, welche beispielsweise bei dem herkömmlichen Verfahren bei der Baumfärbung von Flächengebilden als Ursachen für Kantenabläufe bzw. Längenabläufe anzusehen sind. Ebenfalls können bei dem erfindungsgemässen Verfahren keine Dispersionsfarbstoffe unerwünscht agglomerieren, wie dies bei den herkömmlichen Dispersionsfärbungen bisweilen der Fall ist, so dass somit durch Anwendung des erfindungsgemässen Verfahrens die bei herkömmlichen Färbeverfahren in wässrigen Systemen bekannten Aufhellungen von Dispersionsfarbstoffen und damit entsprechende Fleckenbildungen vermieden werden.

Ein weiterer Vorteil des erfindungsgemässen Verfahrens besteht darin, dass man Dispersionsfarbstoffe einsetzen kann, die ausschliesslich aus dem eigentlichen Farbstoff bestehen und nicht die üblichen Dispergatoren und Stellmittel enthalten. Bei vielen Farbstoffen kann zudem auf eine Mahlung der Farbstoffe verzichtet werden.

Eine bevorzugte Ausführungsform des erfindungsgemässen Verfahrens besteht darin, dass man einen Anthrachinonfarbstoff der Formel (1) verwendet, worin
$Z_1$ und $Z_2$ je Wasserstoff,
R Wasserstoff, $C_1$-$C_{12}$-Alkyl oder $C_1$-$C_{12}$-Alkyl, welches durch Phenyl substituiert ist, Phenyl oder Phenyl, welches durch Hydroxyalkyl oder $C_1$-$C_4$-Alkylsulfonyloxy substituiert ist,
$R_1$ Wasserstoff, Chlor, $C_1$-$C_2$-Alkoxy, $C_1$-$C_2$-Alkoxycarbonyl, $C_1$-$C_6$-Alkyltetrazolyl, Phenoxysulfonyl, Phenoxy, das gegebenenfalls durch $C_1$-$C_8$-Alkoxy, $C_1$-$C_8$-Alkylthio, $C_1$-$C_8$-Alkyl, Cyan-$C_1$-$C_4$-alkyl oder einen Rest der Formel

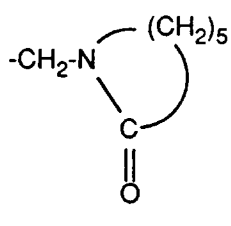

substituiert ist, oder einen Rest der Formel

-O - A - O - Y

worin A $C_2$-$C_4$-Alkylen und Y $C_1$-$C_4$-Alkoxycarbonyl, Phenyl oder Phenoxycarbonyl bedeuten, wobei die

Phenylgruppen durch $C_1$-$C_4$-Alkoxy oder $C_1$-$C_4$-Alkyl substituiert sein können,
$R_2$ Wasserstoff, Chlor, Cyan oder Phenoxy, welches durch $C_1$-$C_4$-Alkyl oder $C_1$-$C_4$-Alkoxy substituiert sein kann, und
$R_3$ Hydroxy, Amino oder einen Rest -$NHR_7$ bedeutet, wobei $R_7$ $C_1$-$C_{12}$-Alkyl, welches durch Phenyl substituiert sein kann, bedeutet.

Vorzugsweise werden solche Farbstoffe der Formel (1) verwendet, worin
R Wasserstoff, verzweigtes $C_4$-$C_8$-Alkyl, welches durch Phenyl substituiert sein kann, oder Phenyl, welches durch Hydroxy-$C_2$-$C_3$-alkyl oder $C_1$-$C_4$-Alkylsulfonyloxy substituiert ist,
$R_1$ Wasserstoff, Phenoxy, das durch $C_1$-$C_4$-Alkyl oder $C_1$-$C_4$-Alkoxy substituiert sein kann, oder einen Rest

$$- O - C_2H_4 - O - Y$$

worin Y Phenyl, $C_1$-$C_4$-Alkylphenyl, $C_1$-$C_4$-Alkoxyphenyl, Phenoxycarbonyl oder $C_1$-$C_4$-Alkoxycarbonyl bedeutet,
$R_2$ Wasserstoff, und
$R_3$ Hydroxy, Amino oder gegebenenfalls durch Phenyl substituiertes $C_1$-$C_8$-Alkyl bedeutet.

Eine weitere bevorzugte Ausführungsform des erfindungsgemässen Verfahrens besteht darin, dass man einen Anthrachinonfarbstoff der Formel (2) verwendet, worin
X Amino oder Nitro,
$R_4$ Hydroxy, Amino oder $C_1$-$C_4$-Alkylamino,
n 0, 1 oder 2 und
$R_5$ Hydroxy, Amino, $C_1$-$C_4$-Alkylamino, Phenylamino oder Hydroxy-$C_2$-$C_4$-alkylphenylamino bedeuten;
oder darin dass man einen Anthrachinonfarbstoff der Formel (3) verwendet, worin
A einen $C_2$-$C_4$-Alkylenrest und
$R_6$ $C_1$-$C_4$-Alkyl, $C_1$-$C_4$-Alkoxy, $C_1$-$C_4$-Alkoxyethoxy, Phenoxy, Phenoxyethoxy oder $C_1$-$C_4$-Alkoxycarbonylethoxy bedeuten.

Unter Alkylresten sind erfindungsgemäss generell geradkettige, verzweigte oder cyclische Alkylgruppen zu verstehen. Es handelt sich z.B. um Methyl, Ethyl, Propyl, i-Propyl, Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert.-Octyl, 2-Ethylhexyl, n-Nonyl, Isononyl, Decyl, Dodecyl, Cyclopentyl, Cyclohexyl, Methylcyclohexyl sowie die dazugehörenden Isomeren. Die Alkylreste enthalten vorzugsweise 1 bis 6 C-Atome, vor allem 1 bis 4 C-Atome.

Diese Alkylreste können substituiert sein, z.B. durch Halogen, Hydroxy, Alkoxy, Cyan oder Phenyl. Beispiele für solche subtituierten Alkylreste sind Hydroxyethyl, Methoxymethyl, Ethoxyethyl, Cyanethyl, Propoxypropyl, Benzyl, Chlorethyl oder Cyanoethyl.

Geeignete Alkylreste sind vorzugsweise solche mit 1 bis 4 C-Atomen, z.B. Methoxy, Ethoxy, Propoxy, iso-Propoxy, n-Butoxy, iso-Butoxy oder tert.-Butoxy.

Auch die Phenylreste können substituiert sein, z.B. durch Chlor, Brom, $C_1$-$C_4$-Alkyl, $C_1$-$C_4$-Alkoxy, Nitro oder Cyan.

Halogen bedeutet Fluor, Jod, Brom oder vor allem Chlor.

Wegen iher guten färberischen Eigenschaften im erfindungsgemässen Verfahren sind die in den Beispielen aufgeführten Farbstoffe ganz besonders bevorzugt.

Die Farbstoffe der Formel

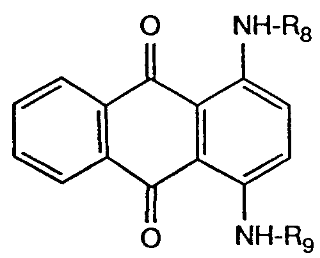

(4)

worin $R_8$ und $R_9$ unabhängig voneinander je Phenyl-$C_3$-$C_8$-alkyl bedeuten, sind neu.

Bevorzugt sind solche Farbstoffe der Formel (4), bei denen $R_8$ und $R_9$ je Phenyl-$C_3$-$C_6$-alkyl bedeuten.

Die Farbstoffe der Formel (4) werden auf an sich bekannte Art erhalten, z.B. indem man 1,4-Dihalogenanthrachinon, wobei Halogen Chlor oder Brom bedeutet, mit einem Amin $R_8$-$NH_2$ und/oder $R_9$-

$NH_2$ umsetzt.

Die übrigen Farbstoffe der Formeln (1), (2) und (3) sind bekannt oder lassen sich auf an sich bekannte Art herstellen.

Das erfindungsgemässe Verfahren eignet sich zum Färben von halbsynthetischen und insbesondere synthetischen hydrophoben Fasermaterialien, vor allem Textilmaterialien. Textilmaterialien aus Mischgeweben, die derartige halbsynthetische bzw. synthetische hydrophobe Textilmaterialien enthalten, können ebenfalls nach dem erfindungsgemässen Verfahren gefärbt werden.

Als halbsynthetische Textilmaterialien kommen vor allem Cellulose-2 1/2-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. aus $\alpha,\alpha$-Dimethyl-4,4'-dihydroxy-diphenylmethan und Phosgen, aus Fasern auf Polyvinylchlorid-, Polypropylen- oder Polyamid-Basis, z.B. Polyamid 6.6, Polyamid 6.10, Polyamid 6, Polyamid 11 oder Poly(1,4-phenylenterephthalamid).

Die bei dem erfindungsgemässen Verfahren angewendete Färbetemperatur richtet sich im wesentlichen nach dem zu färbenden Substrat. Noramlerweise liegt sie etwa zwischen 90 und 200 °C, vorzugsweise zwischen etwa 100 und 150 °C.

Der anzuwendende Druck muss mindestens so gross sein, dass das $CO_2$ in überkritischem Zustand vorliegt. Vorzugsweise liegt der Druck zwischen etwa 73 und 400 bar, insbesondere zwischen etwa 150 und 250 bar. Bei der bevorzugten Färbetemperatur für Polyestermaterial von ca. 130 °C beträgt der Druck etwa 200 bar.

Das Flottenverhältnis (Massenverhältnis Textilmaterial: $CO_2$) beim Färben nach dem erfindungsgemässen Verfahren richtet sich nach der zu behandelnden Ware und deren Aufmachung. Ueblicherweise variiert es zwischen einem Wert von 1 : 2 bis 1 : 100, vorzugsweise etwa 1 : 5 bis 1 : 75. Sollen beispielsweise Polyestergarne, die auf entsprechende Kreuzspulen aufgewickelt sind, nach dem erfindungsgemässen Verfahren gefärbt werden, so geschieht dies vorzugsweise bei relativ kurzen Flottenverhälmissen, d.h. Flottenverhältnissen zwischen 1 : 2 bis 1 : 5. Derartige kurze Flottenverhältnisse bereiten in der Regel bei dem herkömmlichen Färbeverfahren im wässrigen System Schwierigkeiten, da hierbei bedingt durch die hohe Farbstoffkonzentration häufig die Gefahr besteht, dass die feindispersen Systeme agglomerieren. Dies tritt jedoch bei dem erfingunsgemässen Verfahren nicht auf.

Zur Reinigung des überkritischen $CO_2$ nach der Färbung bestehen mehrere Möglichkeiten. Man kann z.B. den in dem überkritischen $CO_2$ verbleibenden Farbstoffrest über entsprechende Filter ad- bzw. absorbieren. Hierfür eignen sich insbesondere die an sich bekannten Kieselgel-, Kieselgur-, Kohle-, Zeolith- und Aluminiumoxidfilter.

Darüberhinaus besteht die Möglichkeit, die nach der Färbung in dem überkritischen $CO_2$ verbleibenden Farbstoffe durch eine Temperatur- und/oder Druckerniedrigung und/oder eine Volumenvergrösserung zu entfernen. Hierbei wandelt sich das überkritische $CO_2$ in das entsprechende Gas um, das dann aufgefangen wird und erneut nach Ueberführung in den überkritischen Zustand zur Färbung von weiteren Substraten verwendet wird. Hierbei scheiden sich die Farbstoffe als flüssige oder feste Farbstoffe ab, die entsprechend gesammelt und für weitere Färbungen weiterverwendet werden können.

Die nachfolgenden Beispiele erläutern die Erfindung.

Beispiel 1: 24,5 µmol des Farbstoffes der Formel

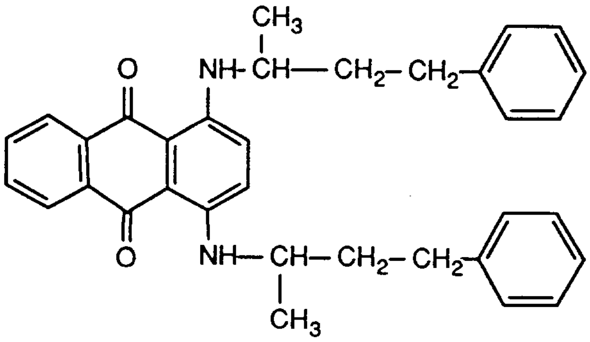

werden auf dem Boden eines Autoklaven mit einem Innenvolumen von 500 ml vorgelegt. 330 g $CO_2$ werden in fester Form (Trockeneis) eingewogen. Ein Streifen Polyestergewebe von 5 g wird um die im Deckel des Autoklaven eingebauten Sensoren für Druck und Temperatur gewickelt und mit einem Faden zusammengeheftet.

Nach dem Verschliessen des Autoklaven geht die Innentemperatur sehr schnell auf ca. -10 °C zurück. Nachdem die Innentemperatur 0 °C erreicht hat, wird der Inhalt des Autoklaven mit etwa 3 °C/min auf 130 °C aufgeheizt. Der Innendruck steigt dabei auf ca. 200 bar an. Diese Bedingungen werden 30 Minuten lang konstant gehalten. Danach wird bei ausgeschalteter Heizung mit Druckluft gekühlt. Druck und Temperatur nehmen dabei exponentiell ab. Nach zwei Stunden werden ca. 70 bar erreicht, danach wird durch Oeffnen eines Ventils entspannt.

Man erhält blau gefärbtes Polyestergewebe in ähnlicher Qualität wie beim Färben nach üblichen Methoden aus wässriger Flotte. Insbesondere die Reib-, Licht- und Waschechtheit der Färbung sind gleich gut.

Der Ausziehgrad des Farbstoffes beträgt etwa 90 %.

Beispiele 2 bis 17: Nach der im Beispiel 1 beschriebenen Methode lassen sich Färbungen auf Polyestergewebe auch mit den folgenden Farbstoffen herstellen:

| Beispiel | Farbstoff |
|---|---|
| 2 | 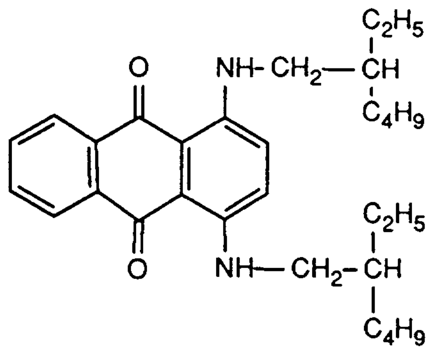 |
| 3 | 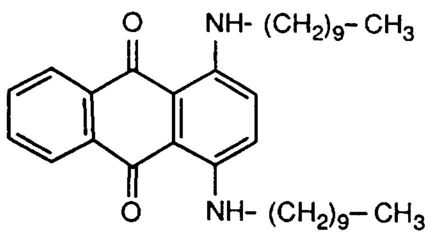 |
| 4 | 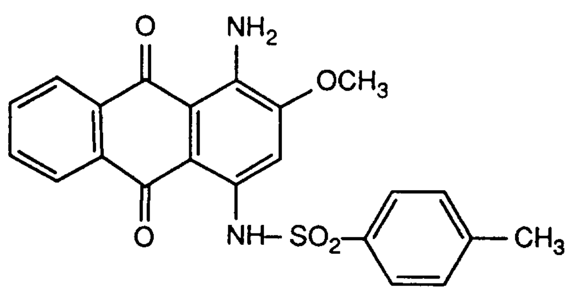 |
| 5 | 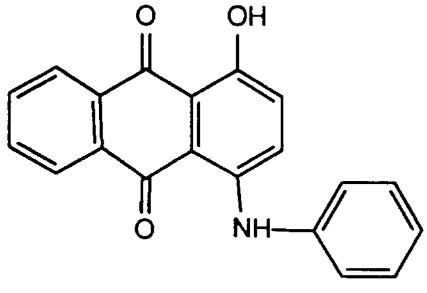 |

6

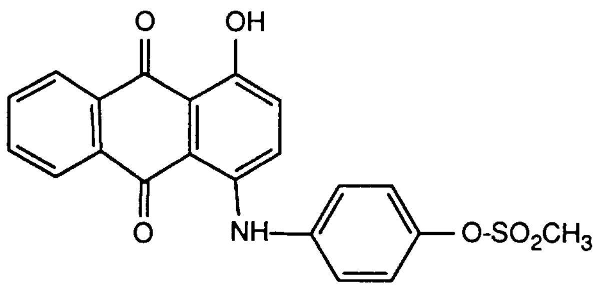

7

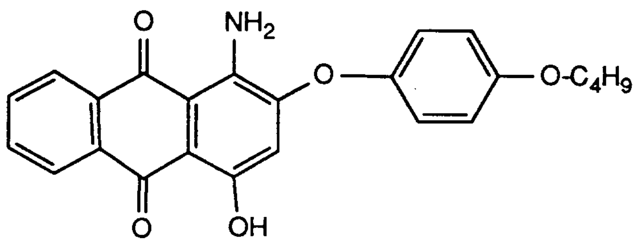

8

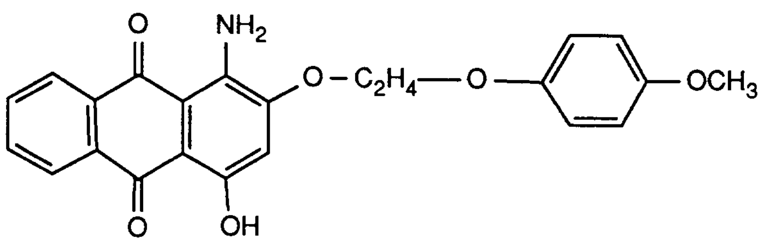

9

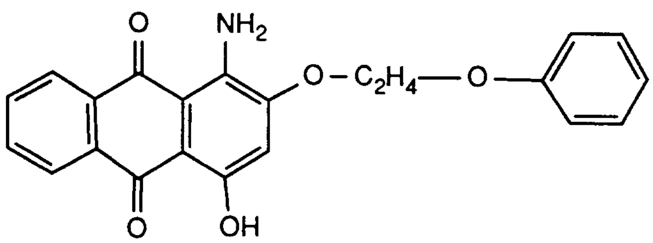

10

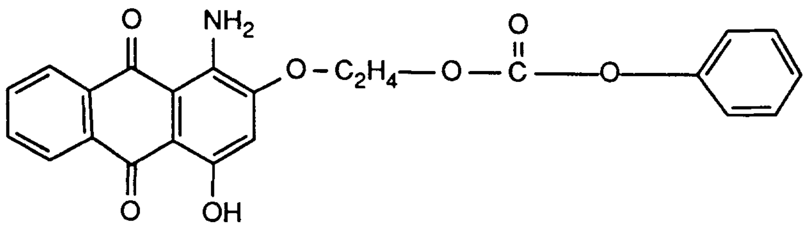

11

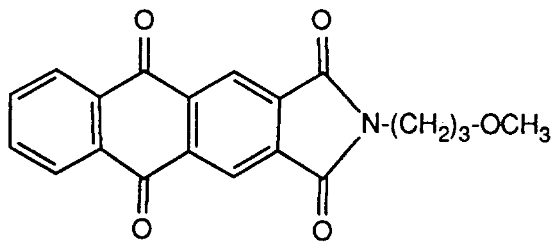

12

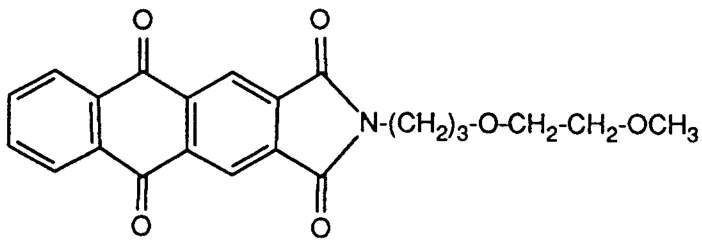

13

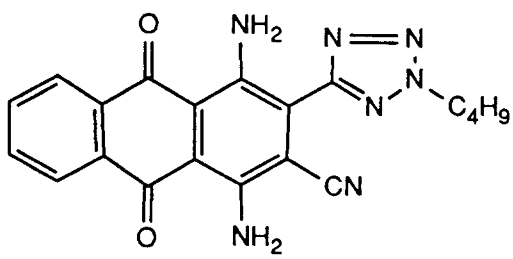

14

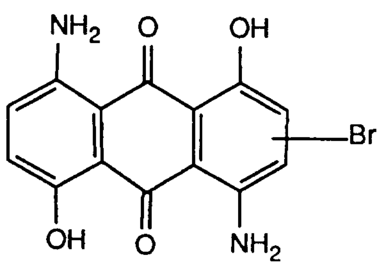

15

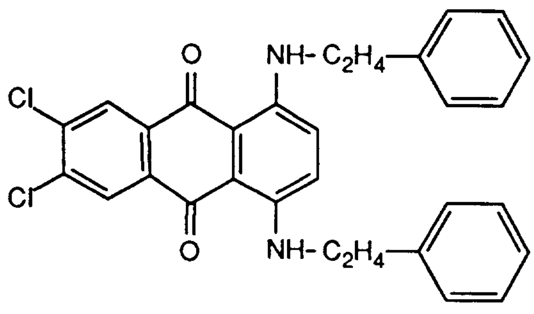

16

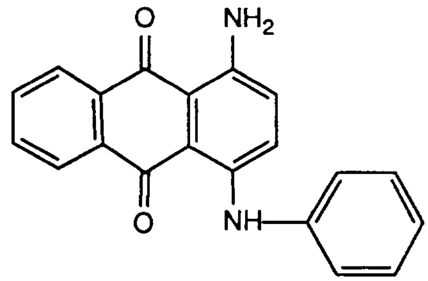

17

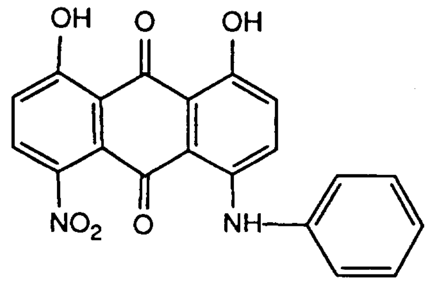

**Patentansprüche**

**1.** Verfahren zum Färben von hydrophobem Textilmaterial mit Dispersionsfarbstoffen, dadurch gekennzeichnet, dass man das Textilmaterial in überkritischem Kohlendioxid mit einem Anthrachinonfarbstoff der Formel

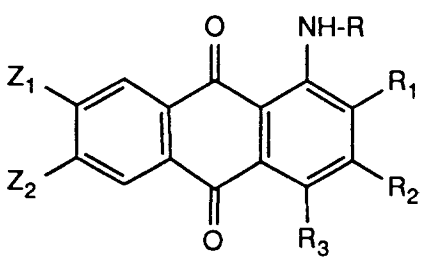

(1),

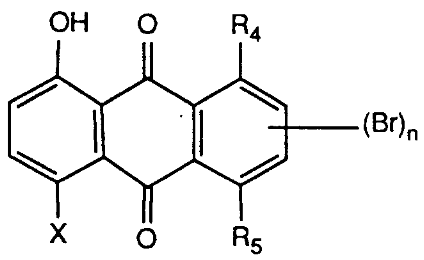

(2) oder

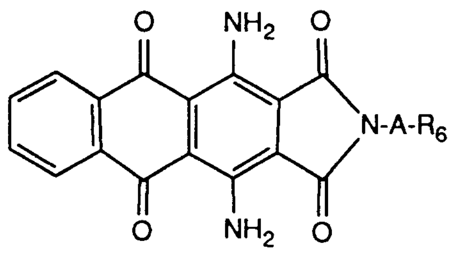

(3)

behandelt, worin
$Z_1$ und $Z_2$ unabhängig voneinander je Wasserstoff oder Halogen,
R Wasserstoff oder gegebenenfalls substituiertes Alkyl oder Phenyl,
$R_1$ Wasserstoff, Chlor, $C_1$-$C_4$-Alkoxy, gegebenenfalls substituiertes Phenoxy, $C_1$-$C_4$-Alkoxycarbonyl, $C_1$-$C_8$-Alkyltetrazolyl, Phenoxysulfonyl oder einen Rest der Formel

- O - A- O - Y

worin A einen Alkylenrest mit 2 bis 6 C-Atomen und Y gegebenenfalls substituiertes Phenyl, Phenoxycarbonyl, Phenylcarbonyl, $C_1$-$C_4$-Alkylcarbonyl oder $C_1$-$C_4$-Alkoxycarbonyl bedeutet,
$R_2$ Wasserstoff, Chlor, gegebenenfalls substituiertes Phenoxy oder Cyan,
$R_3$ Hydroxy, Amino oder einen Rest -NHR$_7$, worin $R_7$ gegebenenfalls substituiertes Alkyl oder Phenylsulfonyl bedeutet,
X Amino oder Nitro,
$R_4$ Hydroxy, Amino oder gegebenenfalls substituiertes Alkylamino,
n 0, 1 oder 2,
$R_5$ Hydroxy, Amino oder gegebenenfalls substituiertes Alkylamino oder Phenylamino,
A einen Alkylenrest mit 2 bis 6 C-Atomen und
$R_6$ $C_1$-$C_6$-Alkyl, $C_1$-$C_6$-Alkoxy, $C_1$-$C_6$-Alkoxy-$C_2$-$C_4$-alkoxy, Phenoxy, Phenoxy-$C_2$-$C_4$-alkoxy oder $C_1$-$C_6$-Alkoxycarbonyl-$C_2$-$C_4$-alkoxy bedeuten.

**2.** Verfahren gemäss Anspruch 1, dadurch gekennzeichnet, dass man einen Anthrachinonfarbstoff der Formel (1) verwendet, worin
$Z_1$ und $Z_2$ je Wasserstoff,
R Wasserstoff, $C_1$-$C_{12}$-Alkyl oder $C_1$-$C_{12}$-Alkyl, welches durch Phenyl substituiert ist, Phenyl oder Phenyl, welches durch Hydroxyalkyl oder $C_1$-$C_4$-Alkylsulfonyloxy substituiert ist,
$R_1$ Wasserstoff, Chlor, $C_1$-$C_2$-Alkoxy, $C_1$-$C_2$-Alkoxycarbonyl, $C_1$-$C_6$-Alkyltetrazolyl, Phenoxysulfonyl, Phenoxy, das gegebenenfalls durch $C_1$-$C_8$-Alkoxy, $C_1$-$C_8$-Alkylthio, $C_1$-$C_8$-Alkyl, Cyan-$C_1$-$C_4$-alkyl oder einen Rest der Formel

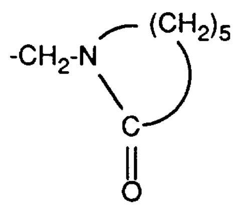

substituiert ist, oder einen Rest der Formel

-O - A - O - Y

worin A $C_2$-$C_4$-Alkylen und Y $C_1$-$C_4$-Alkoxycarbonyl, Phenyl oder Phenoxycarbonyl bedeuten, wobei die Phenylgruppen durch $C_1$-$C_4$-Alkoxy oder $C_1$-$C_4$-Alkyl substituiert sein können,
$R_2$ Wasserstoff, Chlor, Cyan oder Phenoxy, welches durch $C_1$-$C_4$-Alkyl oder $C_1$-$C_4$-Alkoxy substituiert sein kann, und
$R_3$ Hydroxy, Amino oder einen Rest -NHR$_7$ bedeutet, wobei $R_7$ $C_1$-$C_{12}$-Alkyl, welches durch Phenyl substituiert sein kann, bedeutet.

**3.** Verfahren gemäss Anspruch 2, dadurch gekennzeichnet, dass man einen Anthrachinonfarbstoff der Formel (1) verwendet, worin
R Wasserstoff, verzweigtes $C_4$-$C_8$-Alkyl, welches durch Phenyl substituiert sein kann, oder Phenyl, welches durch Hydroxy-$C_2$-$C_3$-alkyl oder $C_1$-$C_4$-alkylsulfonyloxy substituiert ist,
$R_1$ Wasserstoff, Phenoxy, das durch $C_1$-$C_4$-Alkyl oder $C_1$-$C_4$-Alkoxy substituiert sein kann, oder ein Rest

- O - $C_2H_4$ - O - Y

worin Y Phenyl, $C_1$-$C_4$-Alkylphenyl, $C_1$-$C_4$-Alkoxyphenyl, Phenoxycarbonyl oder $C_1$-$C_4$-Alkoxycarbonyl bedeutet,
$R_2$ Wasserstoff, und
$R_3$ Hydroxy, Amino oder gegebenenfalls durch Phenyl substituiertes $C_1$-$C_8$-Alkyl bedeutet.

**4.** Verfahren gemäss Anspruch 1, dadurch gekennzeichnet, dass man einen Anthrachinonfarbstoff der Formel (2) verwendet, worin
X Amino oder Nitro,
$R_4$ Hydroxy, Amino oder $C_1$-$C_4$-Alkylamino,
n 0, 1 oder 2 und
$R_5$ Hydroxy, Amino, $C_1$-$C_4$-Alkylamino, Phenylamino oder Hydroxy-$C_2$-$C_4$-alkylphenylamino bedeuten.

**5.** Verfahren gemäss Anspruch 1, dadurch gekennzeichnet, dass man einen Anthrachinonfarbstoff der Formel (3) verwendet, worin
A einen $C_2$-$C_4$-Alkylenrest und
$R_6$ $C_1$-$C_4$-Alkyl, $C_1$-$C_4$-Alkoxy, $C_1$-$C_4$-Alkoxyethoxy, Phenoxy, Phenoxyethoxy oder $C_1$-$C_4$-Alkoxycarbonylethoxy bedeuten.

**6.** Verfahren nach einem der Ansprüche 1 bis 5, dadurch gekennzeichnet, dass man einen Farbstoff einsetzt, der frei von Zusätzen, insbesondere frei von Stellmitteln und Dispergiermitteln, ist.

**7.** Verfahren nach einem der Ansprüche 1 bis 6, dadurch gekennzeichnet, dass man bei Temperaturen zwischen etwa 90 °C und etwa 200 °C, vorzugsweise zwischen etwa 100 °C und etwa 150 °C, färbt.

**8.** Verfahren nach einem der Ansprüche 1 bis 7, dadurch gekennzeichnet, dass man bei einem Druck zwischen etwa 73 bar und etwa 400 bar, vorzugsweise zwischen etwa 150 bar und etwa 250 bar, färbt.

**9.** Verfahren nach einem der Ansprüche 1 bis 8, dadurch gekennzeichnet, dass man das Substrat in einem Flottenverhältnis zwischen etwa 1 : 2 bis etwa 1 : 100, vorzugsweise zwischen etwa 1 : 5 und etwa 1 : 75, färbt.

**10.** Verfahren nach einem der Ansprüche 1 bis 9, dadurch gekennzeichnet, dass man nach der Färbung das verwendete überkritische $CO_2$ reinigt und erneut zum Färben verwendet.

**11.** Verfahren nach Anspruch 10, dadurch gekennzeichnet, dass man das überkritische $CO_2$ mittels eines Filters reinigt.

**12.** Verfahren nach Anspruch 10 oder 11, dadurch gekennzeichnet, dass man das überkritische $CO_2$ durch eine Temperatur- und/oder Druckerniedrigung und/oder Volumenvergrösserung reinigt.

**13.** Anwendung des Verfahrens gemäss einem der Ansprüche 1 bis 12 zum Färben von Textilmaterial aus Polyester.

## Claims

**1.** A process for dyeing hydrophobic textile material with disperse dyes, which comprises treating the textile material in supercritical carbon dioxide with an anthraquinone dye of formula

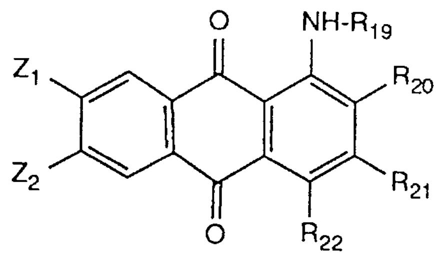

(1)

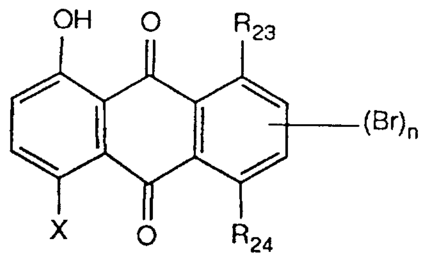

(2) or

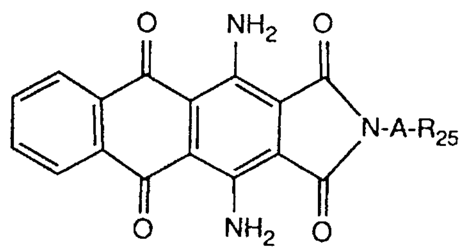

(3)

wherein
$Z_1$ and $Z_2$ are each independently of the other hydrogen or halogen,
R is hydrogen or unsubstituted or substituted alkyl or phenyl,
$R_1$ is hydrogen, chloro, $C_1$-$C_4$alkoxy, unsubstituted or substituted phenoxy, $C_1$-$C_4$alkoxycarbonyl, $C_1$-$C_8$alkyltetrazolyl, phenoxysulfonyl or a radical of formula

- O - A - O - Y

wherein A is an alkylene radical of 2 to 6 carbon atoms and Y is unsubstituted or substituted phenyl, phenoxycarbonyl, phenylcarbonyl, $C_1$-$C_4$alkylcarbonyl or $C_1$-$C_4$alkoxycarbonyl,
$R_2$ is hydrogen, chloro, unsubstituted or substituted phenoxy or cyano,
$R_3$ is hydroxyl, amino or a radical -$NHR_7$, wherein $R_7$ is unsubstituted or substituted alkyl or phenylsulfonyl,
X is amino or nitro,
$R_4$ is hydroxyl, amino or unsubstituted or substituted alkylamino,
n is 0, 1 or 2,
$R_5$ is hydroxyl, amino or unsubstituted or substituted alkylamino or phenylamino,
A is an alkylene radical of 2 to 6 carbon atoms and
$R_6$ is $C_1$-$C_6$alkyl, $C_1$-$C_6$alkoxy, $C_1$-$C_6$alkoxy-$C_2$-$C_4$alkoxy, phenoxy, phenoxy-$C_2$-$C_4$alkoxy or $C_1$-$C_6$alkoxycarbonyl-$C_2$-$C_4$alkoxy.

**2.** A process according to claim 1, which comprises the use of an anthraquinone dye of formula (1), wherein $Z_1$ and $Z_2$ are each hydrogen,
R is hydrogen, $C_1$-$C_{12}$alkyl or phenyl-substituted $C_1$-$C_{12}$alkyl, phenyl or phenyl which is substituted by hydroxyalkyl or $C_1$-$C_4$alkylsulfonyloxy,
$R_1$ is hydrogen, chloro, $C_1$-$C_2$alkoxy, $C_1$-$C_2$alkoxycarbonyl, $C_1$-$C_6$alkyltetraazolyl, phenoxysulfonyl, phenoxy or phenoxy which is substituted by $C_1$-$C_8$alkoxy, $C_1$-$C_8$alkylthio, $C_1$-$C_8$alkyl, cyano-$C_1$-$C_4$alkyl or a radical of formula

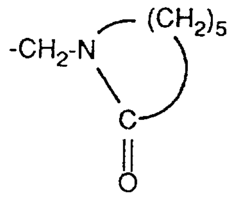

or is a radical of formula

- O - A - O - Y

wherein A is $C_2$-$C_4$alkylene and Y is $C_1$-$C_4$alkoxycarbonyl, phenyl or phenoxycarbonyl, in which the phenyl groups can be substituted by $C_1$-$C_4$alkoxy or $C_1$-$C_4$alkyl,
$R_2$ is hydrogen, chloro, cyano or phenoxy which may be substituted by $C_1$-$C_4$alkyl or $C_1$-$C_4$alkoxy, and
$R_3$ is hydroxyl, amino or a radical -$NHR_7$, wherein $R_7$ is $C_1$-$C_{12}$alkyl which may be substituted by phenyl.

**3.** A process according to claim 2, which comprises the use of an anthraquinone dye of formula (1), wherein
R is hydrogen, branched $C_4$-$C_8$alkyl which may be substituted by phenyl, or phenyl which is substituted by hydroxy-$C_2$-$C_3$alkyl or $C_1$-$C_4$alkylsulfonyloxy,
$R_1$ is hydrogen, phenoxy which may be substituted by $C_1$-$C_4$alkyl or $C_1$-$C_4$alkoxy, or is a radical

- O- $C_2H_4$ - O - Y

wherein Y is phenyl, $C_1$-$C_4$alkylphenyl, $C_1$-$C_4$alkoxyphenyl, phenoxycarbonyl or $C_1$-$C_4$alkoxycarbonyl,
$R_2$ is hydrogen, and
$R_3$ is hydroxyl, amino or $C_1$-$C_8$alkyl or phenyl-substituted $C_1$-$C_8$alkyl.

**4.** A process according to claim 1, which comprises the use of an anthraquinone dye of formula (2), wherein
X is amino or nitro,
$R_4$ is hydroxyl, amino or $C_1$-$C_4$alkylamino,
n is 0, 1 or 2, and
$R_5$ is hydroxyl, amino, $C_1$-$C_4$alkylamino, phenylamino or hydroxy-$C_2$-$C_4$alkylphenylamino.

**5.** A process according to claim 1, which comprises the use of an anthraquinone dye of formula (3), wherein
A is a $C_2$-$C_4$alkylene radical, and
$R_6$ is $C_1$-$C_4$alkyl, $C_1$-$C_4$alkoxy, $C_1$-$C_4$alkoxyethoxy, phenoxy, phenoxyethoxy or $C_1$-$C_4$alkoxycarbonylethoxy.

**6.** A process according to any one of claims 1 to 5, which comprises the use of a dye which is free from additives, especially diluents and dispersants.

**7.** A process according to any one of claims 1 to 6, wherein dyeing is carried out at temperatures between about 90 and about 200 °C, preferably between about 100 and about 150 °C.

**8.** A process according to any one of claims 1 to 7, wherein dyeing is carried out at a pressure of between about 73 and about 400 bar, preferably between about 150 and about 250 bar.

**9.** A process according to any one of claims 1 to 8, wherein the substrate is dyed at a liquor ratio of between about 1:2 and about 1:100, preferably between about 1:5 and about 1:75.

**10.** A process according to any one of claims 1 to 9, wherein the supercritical $CO_2$ used is purified after dyeing and reused for dyeing.

**11.** A process according to claim 10, wherein the supercritical $CO_2$ is purified with a filter.

**12.** A process according to claim 10 or 11, wherein the supercritical $CO_2$ is purified by a temperature and/or pressure reduction and/or by an increase in volume.

**13.** Use of a process according to any one of claims 1 to 12 for dyeing polyester textile material.

**Revendications**

**1.** Procédé pour la teinture de matériaux textiles hydrophobes avec des colorants de dispersion, caractérisé en ce que l'on traite le matériau textile dans du $CO_2$ cupercritique avec un colorant anthraquinonique de formule

(1)

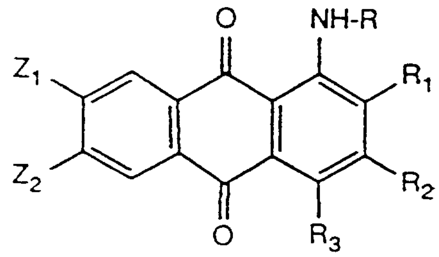

(2)

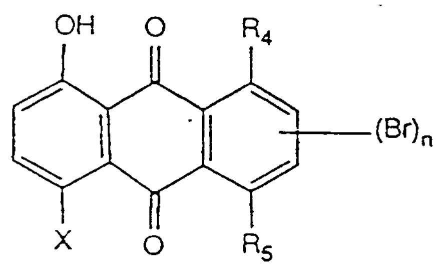

ou

(3)

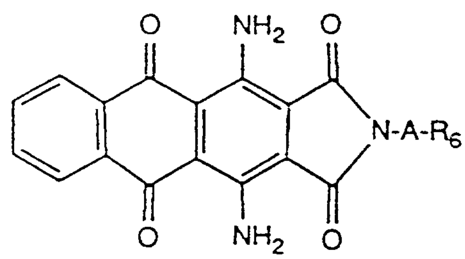

dans lesquelles
$Z_1$ et $Z_2$ représentent indépendamment l'un de l'autre chacun un atome d'hydrogène ou d'halogène,
R représente un atome d'hydrogène ou un groupe alkyle ou phényle éventuellement substitués,
$R_1$ représente un atome d'hydrogène ou de chlore, un groupe alcoxy en $C_{1-4}$, phénoxy pouvant être substitué, (alcoxy en $C_{1-4}$)-carbonyle, (alkyle en $C_{1-8}$)-tétrazolyle, phénoxysulfonyle ou un résidu de formule

-O-A-O-Y

dans laquelle A représente un résidu alkylène comportant de 2 à 6 atomes de carbone et Y un groupe phényle, phénoxycarbonyle, phénylcarbonyle, pouvant être substitués, alkylcarbonyle en $C_{1-4}$ ou alcoxycarbonyle en $C_{1-4}$,
$R_2$ représente un atome d'hydrogène ou de chlore, un groupe phénoxy pouvant être substitué ou un groupe cyano,

$R_3$ représente un groupe hydroxy, amino ou un résidu $-NHR_7$, où $R_7$ représente un groupe alkyle ou phénylsulfonyle pouvant être substitués,
X représente un groupe amino ou nitro,
$R_4$ représente un groupe hydroxy, amino ou un groupe alkylamino éventuellement substitué,
n est égal à 0, 1 ou 2
$R_5$ représente un résidu hydroxy, amino ou alkylamino ou phénylamino éventuellement substitués,
A représente un résidu alkylène comportant de 2 à 6 atomes de carbone,
$R_6$ représente un groupe alkyle en $C_{1-6}$, alcoxy en $C_{1-6}$, (alcoxy en $C_{1-6}$)-(alcoxy en $C_{2-4}$), phénoxy, phénoxy-(alcoxy en $C_{2-4}$) ou (alcoxy en $C_{1-6}$-carbonyl-(alcoxy en $C_{2-4}$).

**2.** Procédé conforme à la revendication 1, caractérisé en ce que l'on utilise un colorant anthraquinonique de formule (1), dans lequel
$Z_1$ et $Z_2$ représentent un atome d'hydrogène,
R représente un atome d'hydrogène, un groupe alkyle en $C_{1-12}$ pouvant être substitué ou non par un résidu phényle, ou un groupe phényle éventuellement substitué parun résidu hydroxyalkyle ou (alkyle en $C_{1-4}$)-sulfonyloxy,
$R_1$ représente un atome d'hydrogène ou de chlore, un groupe alcoxy en $C_{1-2}$, (alcoxy en $C_{1-2}$)-carbonyle, (alkyle en $C_{1-6}$)-tétrazolyle, phénoxysulfonyle, phénoxy pouvant être substitué par un résidu alcoxy en $C_{1-8}$, alkylthio en $C_{1-8}$, alkyle en $C_{1-8}$, cyano-(alkyle en $C_{1-8}$) ou un résidu de formule

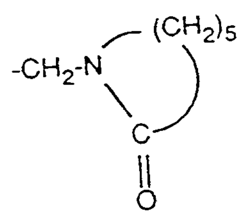

ou un résidu de formule

$-O-A-O-Y$

dans laquelle A représente un résidu alkylène en $C_{2-4}$ et Y un groupe (alcoxy en $C_{1-4}$)-carbonyle, phényle ou phénoxycarbonyle, les groupes phényle pouvant porter des substituants alcoxy en $C_{1-4}$ ou alkyle en $C_{1-4}$,
$R_2$ représente un atome d'hydrogène ou de chlore, un groupe cyano ou phénoxy pouvant être substitué par un résidu alkyle en $C_{1-4}$ ou alcoxy en $C_{1-4}$, et $R_3$ représente un groupe hydroxy, amino ou un résidu $-NHR_7$, où $R_7$ représente un groupe alkyle en $C_{1-12}$ pouvant être substitué par un groupe phényle.

**3.** Procédé conforme à la revendication 2, caractérisé en ce que l'on utilise un colorant anthraquinonique de formule (1) dans lequel
R représente un atome d'hydrogène un groupe alkyle en $C_{4-8}$ à chaîne ramifiée pouvant être substitué par un résidu phényle, ou un groupe phényle substitué par un groupe hydroxy-(alkyle en $C_{2-3}$)-ou (alkyle en $C_{1-4}$)-sulfonyloxy,
$R_1$ représente un atome d'hydrogène, un groupe phénoxy pouvant être substitué par un résidu alkyle en $C_{1-4}$ ou alcoxy en $C_{1-4}$, ou un résidu

$-O-C_2H_4-O-Y$

où Y représente un groupe phényle, (alkyle en $C_{1-4}$)-phényle, (alcoxy en $C_{1-4}$)-phényle, phénoxycarbonyle ou (alkyle en $C_{1-4}$)-carbonyle,
$R_2$ représente un atome d'hydrogène et
$R_3$ représente un résidu hydroxy, amino ou alkyle en $C_{1-8}$ pouvant être substitué par un noyau phényle.

4. Procédé conforme à la revendication 1, caractérisé en ce que l'on utilise un colorant anthraquinonique de formule (2) dans lequel
X représente un groupe amino ou nitro,
$R_4$ représente un groupe hydroxy, amino ou alkylamino en $C_{1-4}$,
n est égal à 0, 1 ou 2 et
$R_5$ représente un groupe hydroxy, amino, (alkyle en $C_{1-4}$)-amino, phénylamino ou hydroxy-(alkyle en $C_{2-4}$)-phénylamino.

5. Procédé conforme à la revendication 1, caractérisé en ce que l'on utilise un colorant anthraquinonique de formule (3) dans lequel
A représente un résidu alkylène en $C_{2-4}$ et
$R_6$ représente un groupe alkyle en $C_{1-4}$, alcoxy en $C_{1-4}$, (alcoxy en $C_{1-4}$)-éthoxy, phénoxy, phénoxyéthoxy ou (alcoxy en $C_{1-4}$)-carbonyléthoxy.

6. Procédé conforme à une des revendications 1 à 5, caractérisé en ce que l'on utilise un colorant exempt d'adjuvants, en particulier exempt d'agents d'ajustement et d'agents de dispersion

7. Procédé conforme à une des revendication 1 à 6, caractérisé en ce que l'on teint à des températures comprises entre environ 90 °C et environ 200 °C, de préférence entre environ 100 °C et environ 150 °C.

8. Procédé conforme à une des revendications 1 à 7, caractérisé en ce que l'on teint à une pression comprise entre environ 73 bar et environ 400 bar, de préférence entre environ 150 bar et environ 250 bar.

9. Procédé conforme à une des revendications 1 à 8, caractérisé en ce que le substrat est teint avec un rapport de bain compris entre environ 1/2 et environ 1/100, de préférence entre environ 1/5 et environ 1/75.

10. Procédé conforme à une des revendications 1 à 9, caractérisé en ce que l'on épure le $CO_2$ supercritique utilisé après la teinture et que l'on l'utilise de nouveau pour une teinture ultérieure.

11. Procédé conforme à la revendication 10, caractérisé en ce que l'on épure le $CO_2$ supercritique à l'aide d'un filtre.

12. Procédé conforme à la revendication 10 ou 11, caractérisé en ce que l'on épure le $CO_2$ supercritique par abaissement de la température et/ou de la pression et/ou par augmentation du volume.

13. Utilisation du procédé conforme à une des revendications 1 à 12 pour la teinture de matériaux textiles en polyester.